# EUROPEAN PATENT APPLICATION

(11) **EP 4 703 024 A1**
(43) Date of publication of application: **04.03.2026**
(21) Application number: 24796633.6
(22) Date of filing: 18.03.2024
(51) Int. Cl.: B01D 53/14, B01D 53/62, C01B 32/50

(54) **CARBON DIOXIDE FIXATION METHOD**

(30) Priority: 26.04.2023 JP 2023072041
(71) Applicant: Sumitomo Metal Mining Co., Ltd., Tokyo 105-8716 (JP); The University of Tokyo, Bunkyo-ku, Tokyo 113-8654 (JP)
(72) Inventor: OTSUKA, Hiroshi, Niihama-shi, Ehime 792-0002 (JP); WATANABE, Hiroto, Niihama-shi, Ehime 792-0002 (JP); OHARA, Hideki, Niihama-shi, Ehime 792-0002 (JP); ASANO, Satoshi, Tokyo 105-8716 (JP); TAKAYA, Yutaro, Tokyo 113-8654 (JP); KOTEGAWA, Kan, Tokyo 113-8654 (JP)
(74) Representative: Jones, Nicholas Andrew
(86) International application number: PCT/JP2024/010418
(87) International publication number: WO 2024/224875

(57) **Abstract**

Provided is a fixation method of fixing carbon dioxide in a mineral containing calcium and/or magnesium without using expensive chemical agents. The fixation method includes: a fixation step I of fixing, to surface of an object to be processed 1 containing calcium and/or magnesium, a coating 2 formed by reacting carbon dioxide with the object to be processed 1 in coexistence with water; and a peeling step II of applying an external force to the object to be processed 1 to which the coating 2 is fixed and peeling off the coating 2 to restore carbon dioxide fixation capacity. Forming the coating 2 of carbonate on the surface of the object to be processed 1 and then peeling off the coating 2 makes it possible to fix carbon dioxide without adding expensive chemical agents, which provides extremely high industrial value.

## Description

### Technical Field

The present invention relates to a carbon dioxide fixation method. More specifically, the present invention relates to a carbon dioxide fixation method for fixing carbon dioxide in the atmosphere or exhaust gas to enable sequestration in underground or underwater environments.

### Background Art

In recent years, global warming has become a significant issue, and the reduction of emissions of carbon dioxide, which is a greenhouse gas, has been globally required. In order to reduce carbon dioxide emissions, both technologies for reducing the amount of emissions themselves and fixation technologies, in which captured carbon dioxide is fixed and sequestered in underground or underwater environments, are required. As for the latter fixation technology, a method known as mineral carbonation, in which carbon dioxide is fixed in minerals, has been attracting attention.

Mineral carbonation is a method in which metal elements such as calcium and magnesium contained in minerals are artificially reacted with carbon dioxide to form carbonates. Carbonates such as calcium carbonate (CaCO₃) and magnesium carbonate (MgCO₃) are stable under ambient temperature and pressure, and thus the possibility of carbon dioxide being released after fixation is lower compared to underground storage and the like. Moreover, mineral carbonation imposes fewer geological constraints than underground storage and the like and can be applied to low-concentration carbon dioxide. Therefore, for furnaces, boilers, etc. that emit carbon dioxide at concentrations of about 10 to 20% and in quantities of around several tens of thousands to several hundreds of thousands of tons, mineral carbonation can be considered one of the most effective methods.

Known techniques for mineral carbonation utilize minerals such as silicate minerals in natural rocks (CaSiO₃, Mg₃Si₂O₅(OH)₄), quicklime (CaO) in steelmaking slag, and quicklime (CaO) in fly ash.

Patent Document 1 discloses a method in which steelmaking slag is immersed in water in a reaction vessel and a carbon dioxide-containing gas is blown into the water to produce carbonated slag from the steelmaking slag.

Patent Document 2 discloses a method for processing fly ash that also serves to fix carbon dioxide, the method including: [1] a step (washing step) of washing fly ash in a liquid having a pulp concentration of 5 to 100 g/L while blowing CO₂ gas into the liquid, thereby dissolving the Ca content as Ca(HCO₃)₂; and [2] a step of subjecting the slurry obtained in the washing step to solid-liquid separation to recover Ca(HCO₃)₂ in the post-washing liquid and to recover solids as washing residue.

Patent Document 3 discloses a carbon dioxide fixation method and a carbon dioxide recovery method, the methods including: in an aqueous solution formation step, forming an alkaline aqueous solution containing a raw material that includes a metal element capable of forming a carbonate mineral by being combined with carbonate ions, and a chelating agent; in a separation step, separating the metal element as metal ions from the raw material by reacting the metal element with the chelating agent in the aqueous solution; and in a mineral formation step, forming a carbonate mineral by adding a compound capable of generating carbonate ions to the aqueous solution, thereby causing the carbonate ions generated from the compound to react with the metal ions.

Calcium in steelmaking slag and fly ash, both of which contain several percent of free lime, is known to react with carbon dioxide and readily undergo carbonation. On the other hand, silicate minerals in natural ores exhibit a slower reaction rate compared to free lime (CaO) in slag, such that it is impractical to directly apply the conventional arts disclosed in Patent Documents 1 and 2 to mineral carbonation as they are. Furthermore, although Patent Document 3 improves the reaction rate by using a chelating agent, such chelating agents are generally expensive, and thus the method is not practical from an economic standpoint.

Moreover, in each of the aforementioned conventional arts, silicate minerals tend to react with carbon dioxide on the particle surface, causing the formation of a carbonate film or a metal oxide film (e.g., FeOOH). As a result, the reaction may cease with the calcium and magnesium inside the particles remaining unreacted, which can decrease the reaction rate.

### Citation List

### Patent Literature

Patent Document 1: JP-A-2013-147370
Patent Document 2: JP-A-2005-246225
Patent Document 3: JP-A-2022-102786

### Summary of Invention

### Technical Problem

The present invention has been made in view of the above circumstances, and an object thereof is to provide a fixation method for fixing carbon dioxide in a mineral containing calcium and/or magnesium without using expensive chemical agents.

### Solution to Problem

A carbon dioxide fixation method of a first invention includes: a fixation step of fixing, to an object to be processed containing calcium and/or magnesium, a coating formed by reacting carbon dioxide with the object to be processed in coexistence with water; and a peeling step of applying an external force to the object to be processed to which the coating is fixed and peeling off the coating to restore carbon dioxide fixation capacity.

In a carbon dioxide fixation method of a second invention, which is in the first invention, the fixation step and the peeling step are alternately repeated.

In a carbon dioxide fixation method of a third invention, which is in the first invention, the fixation step and the peeling step are performed simultaneously.

In a carbon dioxide fixation method of a fourth invention, which is in the first invention, the object to be processed is one or more of a mineral containing calcium silicate and/or magnesium silicate obtained through mining and slag, clinker, dust, and incineration ash generated during smelting of the mineral.

In a carbon dioxide fixation method of a fifth invention, which is in the first invention, the object to be processed is pulverized to 64 µm or less and supplied to the fixation step.

In a carbon dioxide fixation method of a sixth invention, which is in the first invention, a weight ratio of the water to the object to be processed in the fixation step is from 0.01 to 10.

In a carbon dioxide fixation method of a seventh invention, which is in the first invention, in the fixation step, the reaction between the object to be processed and the carbon dioxide is carried out while adjusting partial pressure of the carbon dioxide to 0.1 atm to 5 atm.

In a carbon dioxide fixation method of an eighth invention, which is in the first invention, in the fixation step, sodium bicarbonate and/or potassium bicarbonate is further added when the object to be processed is a mineral containing calcium silicate and/or magnesium silicate obtained through mining.

In a carbon dioxide fixation method of a ninth invention, which is in the first invention, in the fixation step, one or more of a sulfide, sulfur, a sulfate, and a sulfite is further added when the object to be processed is a mineral containing calcium silicate and/or magnesium silicate obtained through mining.

In a carbon dioxide fixation method of a tenth invention, which is in the first invention, in the fixation step, the reaction with carbon dioxide is carried out while maintaining a reaction temperature of 5°C to 90°C.

In a carbon dioxide fixation method of an eleventh invention, which is in the first invention, a content of iron in the object to be processed in the fixation step is 25 wt% or less.

In a carbon dioxide fixation method of a twelfth invention, which is in the first invention, in the fixation step, the object to be processed is a mineral containing calcium silicate and/or magnesium silicate obtained through mining, and the method comprises a preheating step of heating the object to be processed to 600°C or higher before the fixation step.

### Advantageous Effects of Invention

According to the first invention, in the fixation step, when carbon dioxide is reacted with the object to be processed containing calcium and/or magnesium in coexistence with water, the coating can be formed on the surface of the object to be processed, and when the coating is peeled off in the peeling step, the object to be processed and the coating can be separated. Carbon dioxide can thus be fixed in the coating without using expensive chemical agents, which provides extremely high industrial value.

According to the second invention, by alternately repeating the fixation step and the peeling step as separate steps, the coating can be sufficiently formed before proceeding to its peeling, thereby achieving high productivity in the overall fixation method.

According to the third invention, since the fixation step and the peeling step are performed simultaneously, the fixation process can be performed even during short operation times.

According to the fourth invention, when calcium and/or magnesium contained in the object to be processed, which is a mineral obtained through mining, dissolves in water and reacts with carbon dioxide, the coating composed of carbonates and the like is formed, thereby enabling carbon dioxide to be fixed in the coating. Additionally, when the coating is composed of carbonates, it is stable under ambient temperature and pressure, resulting in a reduced risk of carbon dioxide release.

According to the fifth invention, since the object to be processed is pulverized to 64 µm or less, the specific surface area of the object to be processed increases, enabling the fixation of a greater amount of carbon dioxide.

According to the sixth invention, since the amount of water coexisting with the object to be processed is in the range of 0.01 to 10 by weight of water relative to the object to be processed, the dissolution reaction can be sufficiently carried out.

According to the seventh invention, since the partial pressure of carbon dioxide is in the range of 0.1 atm to 5 atm, the reaction can proceed sufficiently quickly, and the equipment for introducing carbon dioxide can be simplified.

According to the eighth invention, since sodium bicarbonate and/or potassium bicarbonate is added, the carbonation of silicate can be promoted.

According to the ninth invention, since one or more of a sulfide, sulfur, a sulfate, and a sulfite is added, the dissolution of calcium and/or magnesium into water can be promoted by sulfate ions and/or sulfite ions.

According to the tenth invention, since the reaction temperature is in the range of 5°C to 90°C, the reaction proceeds favorably and excessive heating can be avoided.

According to the eleventh invention, since the iron content contained in the object to be processed is 25 wt% or less, the carbonation of calcium and/or magnesium is less likely to be inhibited, enabling efficient fixation of carbon dioxide.

According to the twelfth invention, by preheating the object to be processed to 600°C or higher, the crystal structure of the mineral can be partially amorphized, allowing more calcium and/or magnesium to dissolve into water from the object to be processed.

### Brief Description of Drawings

Fig. 1 is a process diagram of a carbon dioxide fixation method according to a first embodiment of the present invention.
Fig. 2 is an explanatory diagram of equipment used in implementing the process shown in Fig. 1.
Fig. 3 is a process diagram of the carbon dioxide fixation method according to a second embodiment of the present invention.
Fig. 4 is an explanatory diagram of equipment used in implementing the process shown in Fig. 3.

### Description of Embodiments

### (Basic Principle of the Present Invention)

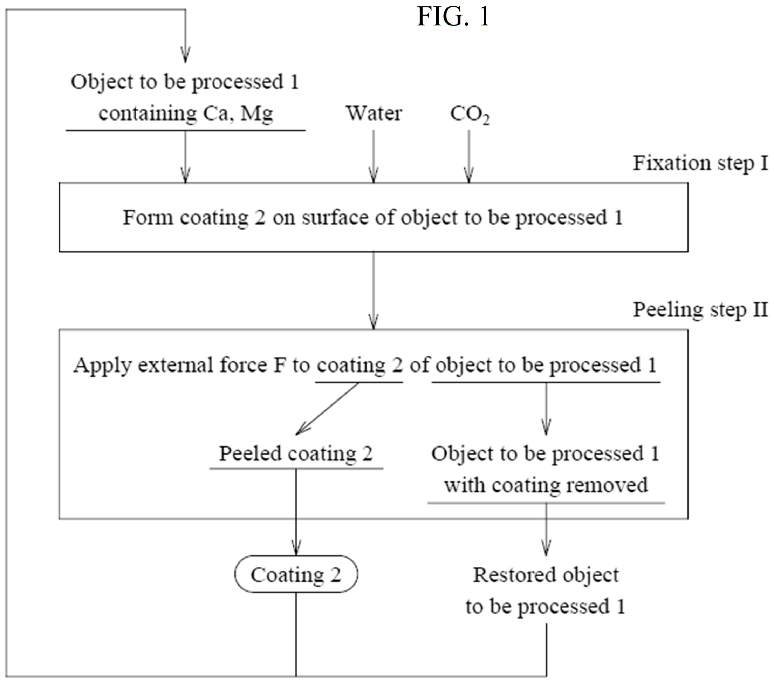

As illustrated in Fig. 1, a carbon dioxide fixation method according to the present invention includes a fixation step I of fixing, on the surface of an object to be processed 1 containing calcium and/or magnesium, a coating 2 formed by reacting the object to be processed 1 with carbon dioxide in coexistence with water; and a peeling step II of applying an external force to the object to be processed 1 on which the coating 2 is fixed to peel off the coating 2 to restore the carbon dioxide fixation capacity.

The fixation method of the present invention includes a method of alternately repeating the fixation step I and the peeling step II, and a method of performing the fixation step I and the peeling step II simultaneously.

According to the carbon dioxide fixation method of the present invention, in the fixation step I, the coating 2 containing carbon dioxide can be formed on the surface of the object to be processed 1 containing calcium and/or magnesium coexisting with water, and the coating 2 is peeled off in the peeling step II to separate the object to be processed 1 and the coating 2 containing carbon dioxide. When the coating 2 is separated, the surface of the object to be processed 1 is exposed, thereby restoring the carbon dioxide fixation capacity.

The fixation method of the present invention is capable of fixing carbon dioxide in the coating without using expensive chemical agents.

A typical example of the coating that is formed is a carbonate. This carbonate is stable under ambient temperature and pressure and has the advantage of posing a lower risk of carbon dioxide release after fixation compared to conventional underground storage and the like, which gives it extremely high industrial value.

The object to be processed 1 of the present invention refers to one or more of a mineral containing calcium silicate and/or magnesium silicate obtained through mining and slag, clinker, dust, and incineration ash generated during smelting of the mineral. These are fixation bodies suitable for carbon dioxide fixation.

### (First Embodiment)

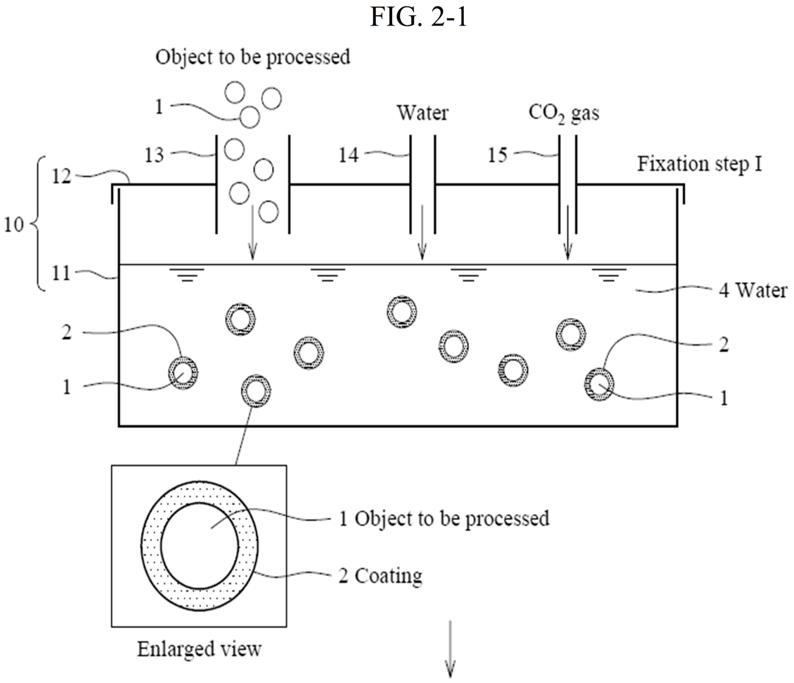

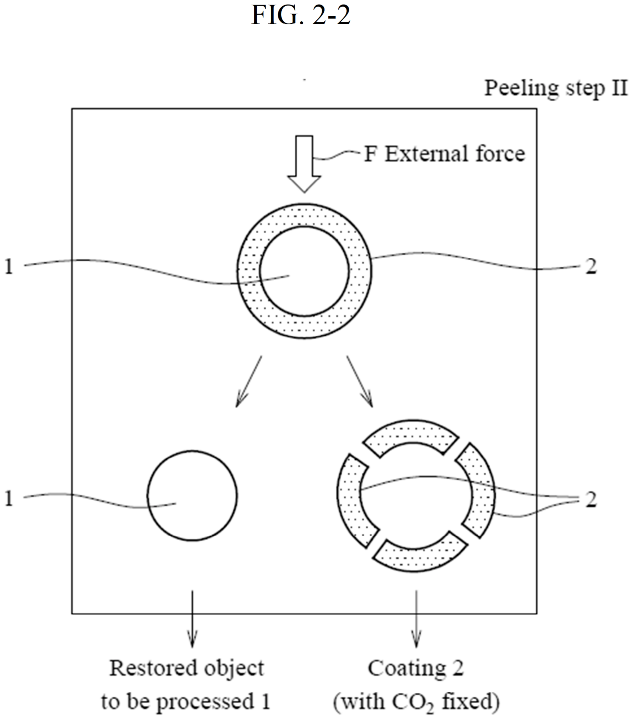

The fixation method of a first embodiment will be described below with reference to the process diagram of Fig. 1 and the equipment explanatory diagram of Fig. 2.

The fixation method of the first embodiment is a method of alternately repeating the fixation step I and the peeling step II.

### (Fixation Step I)

In the fixation step I illustrated in Fig. 1, the object to be processed 1 can dissolve the calcium and/or magnesium contained therein into water by coexisting with water.

Additionally, when carbon dioxide (specifically, carbonate ions) is reacted in water with the calcium and/or magnesium dissolved in the water, carbonates (i.e., calcium carbonate and/or magnesium carbonate), iron oxide (FeOOH), and the like are generated.

Representative reaction equations for the generation of carbonates include the following Equations 1, 2, and 3.

CaO + CO₂ → CaCO₃...... (Equation 1)

MgO + CO₂ → MgCO₃...... (Equation 2)

Mg₃Si₂O₅(OH)₄ + 3CO₂ → 3MgCO₃ + 2SiO₂ + 2H₂O...... (Equation 3)

Carbon dioxide (CO₂) is fixed in these carbonates (CaCO₃, MgCO₃, 3MgCO₃) through these reactions. The generated carbonates, iron oxides, and the like are formed as the coating 2 on the surface of the object to be processed 1.

The fixation step I can be performed using equipment such as that shown in Fig. 2. Reference numeral 10 indicates a reaction vessel, which includes a vessel body 11 and a lid 12, and is sealable. Into the reaction vessel 10, the object to be processed 1 can be supplied by a supply device 13 (e.g., a chute), water can be supplied via a water conduit 14, and carbon dioxide gas can be introduced via an introduction conduit 15. When water 4 is stored in the vessel body 11 of the reaction vessel 10, the object to be processed 1 is present in the water, and carbon dioxide is also dissolved in the water, the reaction for generating carbonates and the like can be carried out.

Note that the equipment used in the fixation step I is not limited to that shown in Fig. 2, and any equipment may be used as long as the object to be processed 1 can be reacted with carbon dioxide in water.

Additionally, although not shown, the reaction vessel 10 in Fig. 2 may be provided with a stirring device for stirring the object to be processed 1 and water in the vessel body 11, in which case the generation of carbonates can be carried out more efficiently.

In the fixation step I, it is preferable that the object to be processed 1 to be supplied is pulverized to achieve micronization. This increases the specific surface area, making it possible to fix a greater amount of carbon dioxide. Common ball mills or vibration mills can be used for pulverization. The particle size after micronization is preferably 64 µm or less, and more preferably 32 µm or less. The lower limit of micronization is 1 µm, and it is preferable that the particle size be 1 µm or more. When the particle size is less than 1 µm, pulverization requires a large amount of energy, and the pulverizing equipment needs to be enlarged.

The object to be processed 1 and the water may be stirred by providing a stirring device to the reaction vessel 10 shown in Fig. 2 as necessary such that all of the objects to be processed 1 come into contact with the water 4.

Although in Fig. 2, the object to be processed 1 is illustrated as a sphere and the coating 2 is illustrated as having a uniform thickness, in practice, the object to be processed 1 has an irregular shape and the thickness of the coating 2 is not uniform, with some only partially covering the object to be processed 1.

The weight ratio of the water 4 relative to the objects to be processed 1 in the vessel body 11 in the fixation step I is preferably 0.01 to 10. That is, the proportion of water may be as small as an amount sufficient to wet the surfaces of the objects to be processed 1, or as large as to form a slurry.

In the fixation step I, the lower limit of the amount of water coexisting with the objects to be processed 1 is 0.01 or more in terms of weight ratio. With such an amount of water, the dissolution reaction of the objects to be processed 1 can be carried out. If the amount of added water is less than 1 wt%, there is a concern that the reaction may become insufficient, and in addition, dust generation is likely to occur, making handling difficult.

The upper limit of the amount of water coexisting with the objects to be processed 1 is adjusted such that the weight ratio of water relative to the objects to be processed 1 is 10 or less, more preferably 5 or less. An excessive amount of added water requires enlargement of the processing equipment and is also unfavorable in terms of water resource conservation.

The carbon dioxide introduced in the fixation step I is derived from the atmosphere or exhaust gas, and by using such carbon dioxide, it is possible to contribute to the reduction of CO₂ emissions on Earth.

The method of introducing carbon dioxide (gas) is not particularly limited. For example, any method may be used as long as the object to be processed 1 can be loaded together with water into a sealed container and carbon dioxide can be introduced therein. Although the introduction conduit 15 is used in the reaction vessel 10 in Fig. 2, this is merely an example.

It is preferable that the introduction pressure of carbon dioxide into the reaction vessel 10 be adjusted such that the partial pressure of the carbon dioxide is from 0.1 atm to 5 atm. When the pressure is within this range, the introduction equipment can be simplified. If the partial pressure of carbon dioxide is less than 0.1 atm, the reaction tends to be slow, and if it is greater than 5 atm, the introduction equipment tends to become expensive.

In the fixation step I, sodium bicarbonate and/or potassium bicarbonate can further be added when the object to be processed 1 is a mineral containing calcium silicate and/or magnesium silicate. This makes it possible to promote the carbonation of silicate. That is, potassium bicarbonate can carbonate magnesium silicate through the reaction shown in Equation 4 below.

Mg₃Si₂O₅(OH)₄ + 6KHCO₃ → 3MgCO₃ + 2SiO₂ + 5H₂O + 3K₂CO₃...... (Equation 4)

When magnesium silicate is carbonated, potassium carbonate is generated. However, the generated potassium carbonate is restored as potassium bicarbonate through the reaction shown in Equation 5 below. Accordingly, after a predetermined amount of potassium bicarbonate has been added, no further addition of potassium bicarbonate is necessary.

K₂CO₃ + CO₂ + H₂O → 2KHCO₃ (restored by CO₂)...... (Equation 5)

In the fixation step I, one or more of a sulfide, sulfur, a sulfate, and a sulfite may further be added when the object to be processed 1 is a mineral containing calcium silicate and/or magnesium silicate. This can promote the dissolution of calcium and/or magnesium into water through the sulfate ions and/or sulfite ions generated. A gas containing sulfur oxides (SOX) may be introduced in place of the sulfide, sulfur, sulfate, and sulfite.

In the fixation step I, the reaction between the calcium and/or magnesium and carbon dioxide proceeds more favorably as the temperature increases. For example, the reaction can be carried out in a temperature range of 5°C to 90°C. In particular, the reaction is preferably carried out in a temperature range of 20°C and higher, and more preferably in a temperature range of 50°C and higher. In this case, the reaction proceeds favorably and excessive heating can be avoided. However, at temperatures of 90°C or higher, more heating is required, which tends to be uneconomical.

The iron content in the object to be processed 1 is preferably 25 weight% or less, and more preferably 10 wt% or less. That is, it is advantageous for the iron content contained in the object to be processed 1 to be low, as this facilitates more efficient carbon dioxide fixation. This is because the iron content in the object to be processed 1 dissolves into water under coexistence with water, is deposited on the particle surface of the object to be processed 1 as hydroxide, and forms a coating composed of iron hydroxide, which tends to inhibit the carbonation of calcium and/or magnesium.

### (Peeling Step II)

As illustrated in Fig. 1, in the peeling step II, an external force F is applied to the coating 2 composed of carbonates and the like obtained in the fixation step I to peel off the coating 2.

As illustrated in Fig. 2, the applied external force F may peel off the coating 2 by breaking or tearing the same. Consequently, it is not necessary to apply a large external force F that causes destruction of the particle of the object to be processed 1, and only the application of a relatively small external force is required.

The application of the external force can be performed, for example, by a device such as a homogenizer (micronizer), agitator (stirrer), or wet scrubber (wet-type dust collector), or even gentle mixing with a mortar and pestle may be sufficient. Thus, without being limited to the various devices exemplified above, an ultrasonic vibration device that applies a smaller external force F may also be employed. Furthermore, the external force may be applied using thermal stress to perform the peeling process.

Although the objects to be processed 1 and the coatings 2 separated in the peeling step II are separated, they remain in a mixed state inside the reaction vessel 10. Thus, after repeating the fixation step I and the peeling step II several times (e.g., three times), the objects to be processed 1 and the coatings 2 can be recovered together.

When the coating 2 obtained as above is composed of carbonates, it is stable under ambient temperature and pressure, such that by sequestering it in underground, underwater, or similar environments after fixation, the advantage of a lower risk of carbon dioxide release compared to conventional underground storage and the like can be achieved.

Additionally, the object to be processed 1 from which carbon dioxide has been separated will have a newly exposed surface as illustrated in Fig. 2. Thus, even when the fixation of carbon dioxide reaches saturation, its fixation capacity can be easily restored, and the object to be processed 1 can be supplied to the fixation step I again as illustrated in Fig. 1.

In the above first embodiment, by alternately repeating the fixation step I and the peeling step II as separate steps, the coating 2 is sufficiently formed before proceeding to the peeling of the coating 2, thereby improving the productivity of the overall fixation method.

### (Second Embodiment)

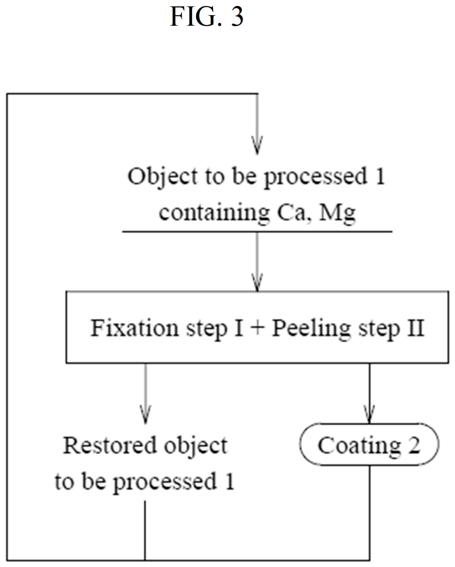

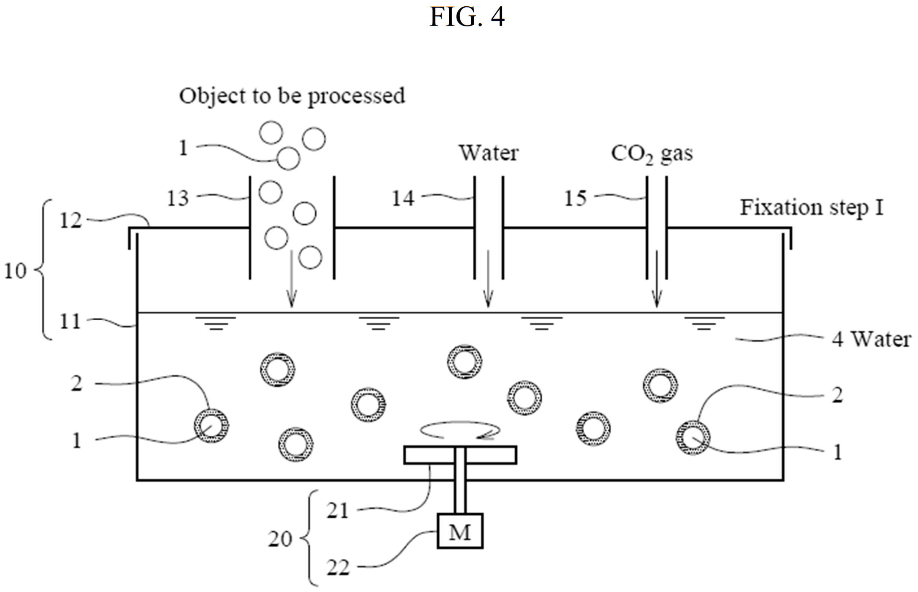

The fixation method of a second embodiment will be described below with reference to the process diagram of Fig. 3 and the equipment explanatory diagram of Fig. 4.

The fixation method of the second embodiment is a method of performing the fixation step I and the peeling step II simultaneously.

As illustrated in Fig. 3, the fixation method of the second embodiment performs the fixation step I and the peeling step II simultaneously. As illustrated in Fig. 4, the second embodiment may be performed by providing a stirring device 20 in the reaction vessel 10 and applying the external force F to peel off the coating 2 while forming the coating 2 composed of carbonates and the like.

The structure and function of the stirring device 20 to be used are not particularly limited, and an example includes one in which a stirring blade 21 is rotated by a motor or the like 22. By stirring, the external force F is applied as the objects to be processed 1 collide with each other or with the stirring blade 21 in the water, causing the coatings 2 to peel off from the objects to be processed 1. By simultaneously carrying out the formation and peeling of the coating 2 composed of carbonates and the like in this manner, the coating 2 can be formed while a new surface of the object to be processed 1 is exposed, enabling carbon dioxide to be fixed in this coating 2. Thus, carbon dioxide fixation can be performed efficiently. Additionally, the carbon dioxide fixation capacity of the object to be processed 1 can be restored.

In the above second embodiment, since the fixation step I and the peeling step II are performed simultaneously, the fixation process can be performed even during short operation times.

Additionally, as illustrated in Fig. 3, the restored object to be processed 1 makes it possible to supply the object to be processed 1 to the fixation step I again.

### (Other Embodiments)

The carbon dioxide fixation method of the present invention may be provided with a preheating step before the fixation step I. When the object to be processed 1 is a mineral containing calcium silicate and/or magnesium silicate, providing such a preheating step makes it possible to partially amorphize the crystal structure of this mineral. Consequently, more calcium and/or magnesium can be dissolved into water from the object to be processed 1. Specifically, it is preferable to heat to 600°C or higher, whereby dissolution can be favorably carried out. Consequently, the reaction in the fixation step I is activated, enabling efficient carbon dioxide fixation.

### Examples

### [Example 1]

The fixation method illustrated in Fig. 1 was experimentally conducted as follows.

### (Fixation Step I)

As the object to be processed 1, waste ore having lizardite as its main component and containing 23% Fe, 13% Si, and 14% Mg was used. The entire amount of the waste ore was pulverized to a particle size of 64 µm or less using a mortar and pestle. A slurry was prepared by adding 15 mL of pure water to 3 g of the pulverized waste ore. The prepared slurry was charged into a sample container (a jar-type sample container using fluororesin (trade name Teflon^{®})), and carbon dioxide was supplied while stirring such that the internal pressure of the sealed container reached 5 atm, which was held for a week. The test was conducted at room temperature without heating the sample container. The slurry taken out from the sample container was subjected to solid-liquid separation, and the solid portion was dried. The amount of absorbed carbon dioxide (by weight) was then calculated by total carbon measurement. As a result of the calculation, the amount of absorbed carbon dioxide was 0.85 wt% relative to the waste ore.

### (Peeling Step II)

Subsequently, the dried sample was lightly stirred with a mortar to perform the peeling process. Thereafter, 1.5 g was taken out, and 7.5 mL of water was added to prepare a slurry again. The prepared slurry was charged into a sample container in the same manner as the first time, and carbon dioxide was supplied while stirring such that the internal pressure of the sealed container reached 5 atm, which was held for a week.

The experimental results showed that the amount of absorbed carbon dioxide (by weight) was 1.68 wt% relative to the mineral, and an increase in the carbon dioxide absorption amount was observed even after two weeks from the beginning of the test.

### [Comparative Example 1]

The procedure was conducted in the same manner as in Example 1, except that the peeling step II was not performed. The experimental results showed that the carbon dioxide absorption amount relative to the mineral after four weeks from the beginning of the test was 0.8 wt%, and no increase in the carbon dioxide absorption amount was observed.

### (Conclusion)

As described above, it was confirmed that by performing the carbon dioxide fixation method of the present invention, carbon dioxide can be absorbed by a coating formed on the surface of a mineral containing calcium and/or magnesium without adding expensive chemical agents.

### Industrial Applicability

The present invention can be utilized to reduce carbon dioxide in the atmosphere by fixing carbon dioxide in a coating composed of carbonates and the like, and sequestering it in underground, underwater, or similar environments.

### Reference Signs List

- 1: Object to be processed
- 2: Coating
- 4: Water
- 10: Reaction vessel
- 11: Vessel body
- 20: Stirring device
- 21: Stirring blade

## Claims

1. A carbon dioxide fixation method comprising:
a fixation step of fixing, to an object to be processed containing calcium and/or magnesium, a coating formed by reacting carbon dioxide with the object to be processed in coexistence with water; and
a peeling step of applying an external force to the object to be processed to which the coating is fixed and peeling off the coating to restore carbon dioxide fixation capacity.

2. The carbon dioxide fixation method according to claim 1, wherein
the fixation step and the peeling step are alternately repeated.

3. The carbon dioxide fixation method according to claim 1, wherein
the fixation step and the peeling step are performed simultaneously.

4. The carbon dioxide fixation method according to claim 1, wherein
the object to be processed is one or more of a mineral containing calcium silicate and/or magnesium silicate obtained through mining and slag, clinker, dust, and incineration ash generated during smelting of the mineral.

5. The carbon dioxide fixation method according to claim 1, wherein
the object to be processed is pulverized to 64 µm or less and supplied to the fixation step.

6. The carbon dioxide fixation method according to claim 1, wherein
a weight ratio of the water to the object to be processed in the fixation step is from 0.01 to 10.

7. The carbon dioxide fixation method according to claim 1, wherein
in the fixation step, the reaction between the object to be processed and the carbon dioxide is carried out while adjusting partial pressure of the carbon dioxide to 0.1 atm to 5 atm.

8. The carbon dioxide fixation method according to claim 1, wherein
in the fixation step, sodium bicarbonate and/or potassium bicarbonate is further added when the object to be processed is a mineral containing calcium silicate and/or magnesium silicate obtained through mining.

9. The carbon dioxide fixation method according to claim 1, wherein
in the fixation step, one or more of a sulfide, sulfur, a sulfate, and a sulfite is further added when the object to be processed is a mineral containing calcium silicate and/or magnesium silicate obtained through mining.

10. The carbon dioxide fixation method according to claim 1, wherein
in the fixation step, the reaction with carbon dioxide is carried out while maintaining a reaction temperature of 5°C to 90°C.

11. The carbon dioxide fixation method according to claim 1, wherein
a content of iron in the object to be processed in the fixation step is 25 wt% or less.

12. The carbon dioxide fixation method according to claim 1, wherein
in the fixation step, the object to be processed is a mineral containing calcium silicate and/or magnesium silicate obtained through mining, and
the method comprises a preheating step of heating the object to be processed to 600°C or higher before the fixation step.
